# FASCICULE DE BREVET EUROPEEN

(11) **EP 3 948 001 B1**
(45) Date de publication et mention de la délivrance du brevet: **26.11.2025**
(21) Numéro de dépôt: 20713668.0
(22) Date de dépôt: 30.03.2020
(51) Int. Cl.: F16D 3/06, F16D 3/14, F16D 3/48, F16D 3/62, F16F 15/121, F16F 15/129

(54) **AMORTISSEUR DE TORSION ET DISQUE D'EMBRAYAGE**
TORSIONSDÄMPFER UND KUPPLUNGSSCHEIBE
TORSION DAMPER AND CLUTCH DISC

(30) Priorité: 29.03.2019 FR 1903377
(43) Date de publication de la demande: 09.02.2022
(73) Titulaire: VALEO EMBRAYAGES, 80009 Amiens (FR)
(72) Inventeur: BOUCHE, Gabriel, 95892 Cergy Pontoise (FR); DAST, Pascal, 95892 Cergy Pontoise (FR); VERHOOG, Roel, 95892 Cergy Pontoise (FR); MARECHAL, Olivier, 95892 Cergy Pontoise (FR); DUBOIS, Bernard, 95892 Cergy Pontoise (FR)
(74) Mandataire: Valeo Powertrain Systems
(86) Numéro de dépôt international: PCT/EP2020/058931
(87) Numéro de publication internationale: WO 2020/201204

(56) Documents cités:
- EP-A1- 0 778 427
- EP-A1- 0 778 427
- EP-A1- 0 778 427
- WO-A1-2018/104530
- WO-A1-2018/104530
- WO-A1-2018/167440
- WO-A1-2018/167440

## Description

L'invention se rapporte à un amortisseur de torsion pour un groupe motopropulseur de véhicule. Plus précisément, l'invention est destinée aux disques d'embrayages de véhicules automobiles., par exemple pour des camions.

### ÉTAT DE LA TECHNIQUE ANTÉRIEURE

Un disque d'embrayage comprend traditionnellement un disque de friction avec un axe de rotation X, doté de garnitures de friction, un moyeu configuré pour entrainer en rotation selon cet arbre X un arbre d'entrée de boite de vitesse et un amortisseur de torsion agencé cinématiquement entre le disque de friction et le moyeu. Un amortisseur de torsion comprend traditionnellement des ressorts intercalés entre un premier élément et un deuxième élément de l'amortisseur pour se comprimer en autorisant une rotation relative entre le premier élément et le deuxième élément selon l'axe de rotation X et un dispositif de frottement configuré pour dissiper par frottement l'énergie stockée dans les ressorts.

Pour ce faire, les dispositifs de frottement utilisés dans les disques d'embrayage comportent généralement des rondelles de frottement qui sont arrêtées en rotation sur un premier élément de l'amortisseur grâce à des éléments de couplage tels que des dentures ou cannelures, ou à des pattes repliées qui sont insérées dans des fentes complémentaires du premier élément.

De tels dispositifs de frottement présentent l'avantage d'autoriser un déplacement axial de la rondelle de frottement, le long de l'axe X, au fur et à mesure que les pièces de frottement s'amincissent en raison de l'usure.

Néanmoins, pour autoriser un déplacement axial de la rondelle de frottement par rapport au premier élément, les éléments de couplage précités (dentures, cannelures, pattes) doivent coopérer avec un jeu angulaire minimal. En l'absence de jeu angulaire, le déplacement axial de la rondelle de frottement serait difficile voire impossible en raison des frottements axiaux entre les dents / cannelures...

La présence d'un jeu angulaire signifie donc que la rondelle de frottement et le premier élément ne sont pas rigoureusement solidaires en rotation l'un de l'autre, d'autant plus que des phénomènes de matage entre ces éléments de couplage ont tendance à amplifier le jeu angulaire initial au fur et à mesure du fonctionnement du dispositif de frottement. En effet, les vibrations passant dans l'amortisseur engendrent des chocs entre les éléments de couplage précités et le composant support. Le niveau de choc est tel qu'il est possible de mater ou de cisailler ces éléments de couplage.

Ceci peut conduire à une usure prématurée et à des performances réduites du dispositif de frottement.

La demande de brevet EP0778427A1 présente un amortisseur de torsion comprenant une rondelle de frottement dans laquelle un élément flexible relie une portion de fixation en rotation à une portion de frottement.

### EXPOSÉ DE L'INVENTION

L'amortisseur selon l'invention a pour objectif de résoudre les problèmes techniques posés par l'art antérieur en fixant de façon rigide en rotation la rondelle de frottement sur le premier élément.

Ce but est atteint, selon l'invention, au moyen d'un amortisseur de torsion pour un groupe motopropulseur de véhicule, l'amortisseur comprenant :
- un premier élément étant apte à tourner autour d'un axe de rotation X, le premier élément comprenant au moins un élément de support,
- un deuxième élément mobile en rotation par rapport au premier élément selon l'axe X,
- des ressorts montés entre le premier élément et le deuxième élément de façon à se comprimer pour autoriser une rotation relative selon l'axe X entre le premier élément et le deuxième élément,
- un dispositif de frottement comprenant une rondelle de frottement dotée d'au moins une portion de fixation fixée de façon rigide en rotation sur un élément de support du premier élément, la rondelle de frottement ayant une portion de frottement présentant une piste de frottement adossée à une face dorsale de la portion de frottement ; et une rondelle élastique agencée axialement entre le premier élément et la face dorsale de la portion de frottement, chaque portion de fixation au premier élément étant reliée à la portion de frottement par un élément flexible autorisant un déplacement axial de la face dorsale de la portion de frottement par rapport à l'élément de support du premier élément.

Ainsi, on peut réaliser un blocage en rotation entre l'élément de support et la rondelle de frottement, sans jeu angulaire, tout en autorisant un déplacement de la face dorsale de la portion de frottement par rapport à l'élément de support, ce qui permet de compenser les usures des surfaces de frottement.

Comme on le verra ultérieurement, un autre objectif de l'invention est de diminuer la charge axiale d'une rondelle de frottement fixée solidaire en rotation, sans jeu, sur un élément support d'amortisseur.

L'amortisseur peut comporter aussi une ou plusieurs des caractéristiques suivantes :
Le premier élément comprend un organe annulaire tel qu'un disque ou une rondelle dont le centre est agencé sur l'axe de rotation X, le dit au moins un élément de support étant fixe en rotation par rapport à cette rondelle ou à ce disque.

De préférence, ledit au moins un élément de support est une portion de l'organe annulaire. Selon une variante non représentée, ledit au moins un élément de support est un élément rapporté sur l'organe annulaire.

Chaque portion de fixation de la rondelle de frottement est fixée à l'organe annulaire via un élément de support.

L'amortisseur de torsion est apte à transmettre le couple du moteur du véhicule aux roues motrices du véhicule.

Selon un mode de réalisation, le premier élément est destiné à être entrainé en rotation par le moteur du véhicule, et le deuxième élément est destiné à entrainer en rotation un organe d'entrée de boîte de vitesse du véhicule, tel qu'un arbre.

Selon une variante, le deuxième élément est destiné à être entrainé en rotation par le moteur du véhicule, et le premier élément est destiné à entrainer en rotation un organe d'entrée de boîte de vitesse du véhicule, tel qu'un arbre.

La rondelle élastique est agencée axialement entre le premier élément et la face dorsale de la portion de frottement, pour presser axialement la portion de frottement de la rondelle de frottement contre une surface de friction du deuxième élément ou une surface de friction couplée en rotation avec le deuxième élément.

Chaque portion de fixation est bloquée axialement sur l'un des éléments de support.

Chaque portion de fixation est montée solidaire en rotation de l'un des éléments de support, sans jeu angulaire.
Notamment, le montage des portions de fixation n'est pas amovible de façon à éviter les jeux angulaires de montage. Autrement dit, les portions de fixation sont fixées de façon non amovible aux éléments de support.

L'élément flexible est une patte flexible ou l'élément flexible comprend une patte flexible.

La portion de fixation est liée à l'élément de support par une liaison encastrement telle qu'un rivetage ou un soudage. On entend par liaison encastrement, une liaison avec aucun degré de liberté.

Chaque élément de support et chaque portion de fixation comportent chacun au moins un orifice, chaque orifice de portion de fixation étant agencé au regard d'un orifice d'élément de support, et chaque portion de fixation est fixée de façon rigide en rotation à l'élément de support correspondant au moyen d'au moins un élément de fixation, telle qu'un rivet ou une goupille.

Chaque portion de fixation est également bloquée axialement sur l'élément de support grâce à l'élément de fixation.

Notamment, l'élément de fixation peut être un rivet comprenant un fût destiné à être engagé dans les orifices de la portion de fixation et de l'élément de support, et comprenant en outre à chaque extrémité une tête élargie par rapport au fût.

La portion de frottement est formée sur une partie radialement interne de la rondelle de frottement et chaque portion de fixation est formée sur une partie radialement externe de la rondelle de frottement.

Les portions de fixation sont agencées radialement à l'extérieur des ressorts.

Les ressorts sont des ressorts hélicoïdaux qui s'étendent circonférentiellement ou tangentiellement autour de l'axe X sur un rayon d'implantation moyen, et les portions de fixation sont agencées radialement à l'extérieur du rayon d'implantation moyen.

Le rayon d'implantation moyen est pris au niveau de la zone médiane de la longueur d'un ressort, et au niveau de l'axe principal autour duquel les spires s'enroulent.

La rondelle de frottement comporte une pluralité de portions de fixation et le premier élément comprend une pluralité d'éléments de supports, chaque élément de support recevant une portion de fixation.

Chaque élément flexible est élastiquement déformable axialement.

Selon un mode de réalisation, la rondelle de frottement et la rondelle élastique sont configurés pour que, sur au moins une plage de déplacement axial de la face dorsale dans laquelle les charges de la rondelle de frottement et le la rondelle élastique sont orientées axialement dans la même direction, l'évolution de la charge exercée par le ou les éléments flexibles est croissante lorsque la face dorsale de la rondelle de frottement s'écarte de la portion de fixation de la rondelle de frottement, et l'évolution de la charge exercée par la rondelle élastique est décroissante lorsque la face dorsale de la rondelle de frottement s'écarte de la portion de fixation de la rondelle de frottement.

Selon un mode de réalisation, la rondelle de frottement et la rondelle élastique sont configurés pour que, de la position axiale initiale de la face dorsale à sa position axiale la plus éloignée de l'élément support, les charges de la rondelle de frottement et le la rondelle élastique sont orientées axialement dans la même direction, et l'évolution de la charge exercée par le ou les éléments flexibles est croissante lorsque la face dorsale de la rondelle de frottement s'écarte de la portion de fixation de la rondelle de frottement, tandis que l'évolution de la charge exercée par la rondelle élastique est décroissante lorsque la face dorsale de la rondelle de frottement s'écarte de la portion de fixation de la rondelle de frottement.

Selon un autre mode de réalisation, la rondelle de frottement et la rondelle élastique sont configurées de sorte que, en fonctionnement, pour au moins un état de compression de la rondelle élastique, une charge axiale est exercée par chaque élément flexible dans une direction opposée à la direction de la charge exercée par la rondelle élastique sur la portion de frottement.

La charge exercée par la rondelle élastique est plus importante que la charge exercée par la ou les éléments flexibles de la rondelle de frottement.

L'état de compression de la rondelle élastique peut dépendre de la pré charge initiale de la rondelle élastique et de l'état d'usure du dispositif de frottement.

Chaque élément flexible et la rondelle élastique sont configurés de sorte que la charge exercée par la rondelle élastique est plus importante que la charge exercée par le ou les éléments flexibles de la rondelle de frottement.

Selon un mode de réalisation, la rondelle de frottement et la rondelle élastique sont configurés pour que, sur au moins une plage de déplacement axial de la face dorsale, l'évolution de la charge exercée par le ou les éléments flexibles compense l'évolution de la charge de la rondelle élastique, de sorte que la charge résultante soit sensiblement constante sur cette plage de déplacement axial de la face dorsale. Ainsi, la charge générée par les éléments flexibles ne perturbe pas le fonctionnement du dispositif de frottement de l'amortisseur.

Le ou les éléments flexibles présentent une raideur axiale linéaire.

Selon un mode de réalisation particulier, la rondelle de frottement et la rondelle élastique ont configurés de sorte que l'orientation de la charge exercée par le ou les éléments flexibles s'inverse pour un seuil de compression prédéterminé de la rondelle élastique.

Sur une plage de compression de la rondelle élastique, la charge exercée par la rondelle élastique augmente lorsque la rondelle élastique se détend axialement. Autrement dit, la charge est croissante sur cette plage.

La plage de compression correspond donc ici à la plage de déplacement axial de la face dorsale mentionnée ci-dessus.

Selon un mode de réalisation, l'augmentation de la charge sur ladite plage de compression est comprise entre 50% et 200%, notamment entre 100% et 150%, par exemple 120%.

La charge exercée par la rondelle élastique est décroissante entre son état de compression maximal (à plat) et son état de compression minimal (libre), hormis sur la plage de compression de la rondelle élastique pour laquelle la charge exercée par la rondelle élastique augmente lorsque la dimension axiale de la rondelle élastique augmente.

Le ou les éléments flexibles et la rondelle élastique sont configurés de sorte que, sur ladite plage de compression, une diminution de la charge exercée par la ou les éléments flexibles compense l'augmentation de charge de la rondelle élastique sur la plage de compression de sorte que la charge résultante soit sensiblement constante sur ladite plage de compression.

Chaque élément flexible est agencé circonférentiellement entre deux ressorts.

Le premier élément comprend des ouvertures pour loger les ressorts, chaque élément de support étant disposé circonférentiellement entre deux ouvertures voisines.

La portion de frottement est composée d'une pluralité de plaquettes de frottements distantes les unes des autres.

Chaque plaquette de frottement est associée à un seul élément flexible.

Les plaquettes de frottement s'étendent chacune circulairement autour de l'axe X sur un secteur angulaire limité, par exemple compris entre 50 et 120 degrés.

Chaque élément flexible est relié à une plaquette de frottement sur une zone de la plaquette de frottement située circonférentiellement sur une zone médiane de la plaquette de frottement.

Chaque plaquette de frottement et l'élément flexible correspondant forment un T.

De préférence, l'amortisseur comprend autant de plaquettes de frottement que de ressorts intercalés entre le premier élément et le deuxième élément.

De préférence, la portion de frottement forme un anneau radialement interne de la rondelle de frottement.

L'anneau de frottement s'étend autour d'axe de rotation X et se développe radialement.

Cet anneau radialement interne peut être continu ou discontinu.

Autrement dit, il peut comporter des interruptions ou coupures (notamment lorsque la portion de frottement est formée par une pluralité de plaquettes de de frottement).

La rondelle de frottement comprend un anneau radialement externe.

L'anneau radialement externe se développe radialement et peut servir de support à des garnitures de friction, notamment lorsque l'amortisseur est intégré à un disque d'embrayage.

La rondelle de frottement peut aussi être dépourvue d'anneau radialement externe de sorte que chaque portion de fixation est une pâle de fixation espacée circonférentiellement des autres pâles de fixation.

Le cas échéant, et lorsque l'anneau radialement interne qui forme la portion de frottement est discontinu, la rondelle de frottement est alors formée par plusieurs composants distincts disposés autour de l'axe de rotation chaque composant comprenant une pâle de fixation, un élément flexible et une plaquette de frottement.

Par exemple, pour un amortisseur comprenant n ressorts, la rondelle de frottement est formée par n composants, la plaquette de frottement de chaque composant s'étendant de préférence sur un secteur angulaire compris entre 360/n -10 degrés et 360/n - 1 degrés
Chaque élément flexible relie la portion de frottement et l'anneau radialement externe.

En variante ou en combinaison, chaque élément flexible est formé au moins en partie sur l'anneau radialement externe.

La portion de fixation est disposée entre deux ressorts et l'élément flexible contourne ces deux ressorts, radialement à l'extérieur de ces ressorts.

L'anneau radialement externe s'étend autour d'axe de rotation X et se développe radialement.

La portion de fixation, l'élément flexible, la portion de frottement et le cas échéant l'anneau radialement externe sont formés d'une seule pièce, par exemple dans une tôle.

Un espace est présent entre deux éléments flexibles voisins, notamment pour autoriser la disposition d'un ressort. Autrement dit, les éléments flexibles sont chacun agencés entre deux ressorts.

L'anneau radialement externe est disposé contre un bord radialement externe du premier élément.

Chaque portion de fixation est formée sur un évasement qui prolonge chaque élément flexible et qui relie l'élément flexible à l'anneau radialement externe.

Chaque portion de fixation est agencée pour recevoir un ou deux rivets.

Selon un autre mode de réalisation, l'amortisseur comprend n ressorts intercalés circonférentiellement entre le premier élément et le deuxième élément; et la rondelle de frottement comprend n/2 éléments flexibles.

Ainsi, on peut avoir une rondelle de frottement avec moins de raideur, autrement dit on peut faire baisser la valeur de la charge exercée par les éléments flexibles.

Chaque élément flexible comporte un trou. Ainsi la charge exercée est plus faible.

Le trou peut être disposé au niveau d'une extrémité radialement interne de l'élément flexible.

L'amortisseur comprend n ressorts et la rondelle de frottement comprend n/2 portions de fixation.

Chaque portion de fixation est agencée circonférentiellement entre deux ressorts voisins.

Chaque portion de fixation est agencée circonférentiellement entre deux éléments flexibles voisins.

La portion de fixation est formée sur une extension faisant saillie radialement à l'intérieur de l'anneau radialement externe.

L'anneau radialement externe comprend des échancrures, chaque échancrure étant agencée radialement en vis-à-vis d'un élément flexible de sorte que l'échancrure sépare une zone radialement externe de l'élément flexible en deux brins.

La zone radialement externe de l'élément flexible forme ainsi un V.

Ici l'élément flexible est directement relié à l'anneau radialement externe. Les portions de fixation ne séparent pas les éléments flexibles de l'anneau radialement externe.

Chaque élément flexible s'étend dans une direction inclinée par rapport à la direction radiale, par exemple d'un angle compris entre 5 et 30 degrés. Ainsi, pour un même diamètre de rondelle de frottement on augmente la longueur des éléments flexibles, ce qui permet de faire diminuer leur raideur.

Chaque élément flexible présente une extrémité radialement interne et une extrémité radialement externe, l'extrémité radialement interne étant moins large que l'extrémité radialement externe.

La portion de fixation est formée radialement à l'extérieur de l'extrémité radialement externe de l'élément flexible.

La largeur est mesurée dans la direction circonférentielle.

Selon un autre mode de réalisation, chaque élément flexible s'étend entre deux marches de dénivellation axiale.

La rondelle élastique comprend des pattes d'accroche arrêtées en rotation sur le premier élément.

Ces pattes d'accroche sont disposées radialement à l'intérieur des portions de fixation de la rondelle de frottement, avec recouvrement radial.

Les pattes d'accroche de la rondelle élastique sont décalées angulairement par rapport aux éléments flexibles.

La rondelle élastique est comprimée à l'état neuf selon une pré-charge nominale, cette pré-charge nominale étant obtenue lors du montage du deuxième élément contre la rondelle de frottement.

Le premier élément comporte des pattes radiales entre les ouvertures d'accueil des ressorts. Les pattes d'accroche sont logées sur ces pattes.

Les éléments de support sont également agencés sur ces pattes.

Selon un mode de réalisation, la rondelle de frottement est découpée dans une tôle.

Selon un mode de réalisation, la rondelle de frottement est plane avant son montage dans l'amortisseur de torsion.

Selon un mode de réalisation, la rondelle de frottement est montée en prenant en sandwich la rondelle élastique entre le premier élément et la rondelle de frottement.

Le cas échéant, la déformation de la rondelle de frottement lors de son montage permet de générer la charge axiale des éléments flexibles, notamment dans une direction opposée à la direction des efforts exercés par la rondelle élastique.

L'un parmi le premier élément et le deuxième élément comprend deux rondelles latérales montées solidaire en rotations autour de l'axe X et espacées axialement l'une de l'autre ; et l'autre parmi le premier élément et le deuxième élément comprend un disque intermédiaire disposé axialement entre les deux rondelles latérales.

L'invention porte aussi sur un disque d'embrayage pour groupe motopropulseur de véhicule équipé d'un amortisseur tel que décrit précédemment et d'un disque de friction doté de garnitures de friction, le disque de friction étant porté par l'un parmi le premier élément et le deuxième élément, en particulier à sa périphérie externe.

Le deuxième élément comprend deux rondelles latérales et le premier élément comprend un disque central disposé axialement entre les deux rondelles latérales.

Un moyeu est solidaire en rotation des rondelles latérales. Autrement dit, le deuxième élément comprend ce moyeu.

Le moyeu est doté d'un collet de part et d'autre duquel les rondelles latérales viennent en butée axialement.

Le moyeu et les rondelles latérales sont rivetés ensemble.

Selon une première variante, notamment dépourvue de pré-amortisseur, le moyeu est un moyeu de sortie apte à entrainer un arbre d'entrée de boite de vitesse.

Selon une deuxième variante, le moyeu est un moyeu intermédiaire couplé avec un jeu angulaire avec un moyeu de sortie, et le disque d'embrayage comprend en outre un pré-amortisseur doté de ressorts de pré-amortissement disposés cinématiquement entre le moyeu de sortie et le deuxième élément.

Le disque d'embrayage comporte donc un moyeu de sortie entrainé en rotation directement ou indirectement (via un pré-amortisseur par exemple) par l'autre parmi le premier élément et le deuxième élément.

Selon un mode de réalisation, le disque d'embrayage est équipé d'un amortisseur tel que décrit précédemment et d'un disque de friction doté de garnitures de friction sur sa portion radialement externe, le disque de friction étant fixé sur le premier élément et le disque de friction comprenant une zone interne de frottement sur sa portion radialement interne.

Une rondelle additionnelle de frottement est agencée axialement entre la zone interne de frottement du disque de friction et le premier élément, la rondelle additionnelle de frottement étant entrainée en rotation par le deuxième élément.

Il existe une droite parallèle à l'axe de rotation X passant par la zone interne de frottement du disque de friction et la portion de frottement de la rondelle de frottement.

Le disque de friction est fixé sur le premier élément de façon rigide en rotation, sans jeu angulaire.

Ainsi, le premier élément porte deux surfaces de frottement rapportées sans jeu angulaire, ce qui diminue les usures et augmente la fiabilité.

La portion de frottement de la rondelle de frottement et la zone interne de frottement du disque de friction sont agencés axialement de part et d'autre du premier élément, en particulier de ses éléments de support.

Le disque de friction et la rondelle de frottement sont fixés sur le premier élément avec les mêmes éléments de fixation, par exemple les mêmes rivets.

La portion radialement interne du disque de friction est reliée à la portion radialement externe du disque de friction par une portion intermédiaire flexible axialement.

La piste de frottement de la rondelle de frottement est plaquée directement ou indirectement contre l'une des rondelles latérales et le zone interne de frottement du disque de friction est plaquée directement ou indirectement contre l'autre des rondelles latérales.

La charge axiale exercée par la rondelle élastique permet de plaquer non seulement la piste de frottement de la rondelle de frottement contre l'une des rondelles latérales mais aussi la zone interne de frottement du disque de friction contre l'autre des rondelles latérales.

Le disque de friction, le premier élément (en particulier le disque central), la rondelle élastique, la rondelle de frottement et la rondelle additionnelle de frottement forment ensemble un sous-ensemble pré-monté apte à être inséré entre les deux rondelles latérales.

Ce sous-ensemble est monté sans blocage axial sur le moyeu.

### BREVE DESCRIPTION DES FIGURES

D'autres caractéristiques et avantages de l'invention ressortiront à la lecture de la description qui va suivre, en référence aux figures annexées et détaillées ci-après.
La figure 1 [Fig.1] est une vue en perspective d'un disque d'embrayage selon un premier mode de réalisation.
La figure 2 [Fig.2] est une vue schématique en coupe du dispositif de frottement du disque d'embrayage de la figure 1.
La figure 3 [Fig.3] est une vue de face du disque d'embrayage de la figure 1.
La figure 4 [Fig.4] est une vue en perspective éclatée du dispositif de frottement et du premier élément.
La figurée 5 [Fig.5] est une vue en perspective coupée de l'amortisseur de la figure 1.
La figure 6 [Fig.6] est une vue de face de dispositif de frottement du disque d'embrayage de la figure 1.
La figure 7 [Fig.7] représente les raideurs de la rondelle élastique et de la rondelle de frottement, et la résultante de ces deux raideurs.
La figure 8 [Fig.8] est une vue en perspective d'une rondelle de frottement selon un deuxième mode de réalisation.
La figure 9 [Fig.9] illustre un procédé de montage d'une rondelle de frottement selon le deuxième mode de réalisation.
La figure 10 [Fig.10] est une vue en perspective d'une rondelle de frottement selon un troisième mode de réalisation.
La figure 11 [Fig.11] présente un autre disque d'embrayage relatif à un autre mode de réalisation de l'invention.
Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif.

Dans la description et les revendications, on utilise les termes "externe" et "interne" ainsi que les orientations "axiale" et "radiale" pour désigner, selon les définitions données dans la description, des éléments de l'amortisseur. Par convention, l'orientation "radiale" est dirigée orthogonalement à l'axe de rotation X de l'amortisseur déterminant l'orientation "axiale" et, de l'intérieur vers l'extérieur en s'éloignant dudit axe de rotation, l'orientation "circonférentielle" est circulaire autour de l'axe X et l'orientation tangentielle est dirigée orthogonalement à l'axe de rotation de l'amortisseur et orthogonalement à la direction radiale. Les termes "externe" et "interne" sont utilisés pour définir la position relative d'un élément par rapport à un autre, par référence à l'axe de rotation de l'amortisseur, un élément proche de l'axe est ainsi qualifié d'interne par opposition à un élément externe situé radialement en périphérie.

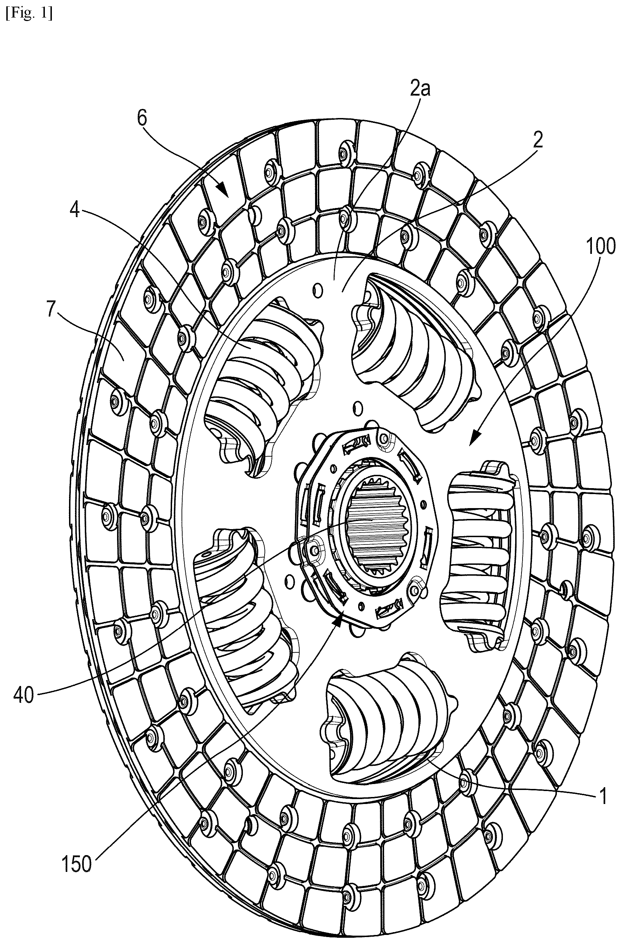

La figure 1 représente une vue en perspective d'un disque d'embrayage pour groupe motopropulseur de véhicule. Le disque d'embrayage est équipé d'un amortisseur 100 et d'un disque de friction 6 doté de garnitures de friction 7.

L'amortisseur de torsion 100 comprend un premier élément 1 apte à tourner autour d'un axe de rotation X, et un deuxième élément 2 mobile en rotation par rapport au premier élément 1 selon l'axe X. Cet amortisseur de torsion 100 est apte à transmettre le couple du moteur du véhicule aux roues motrices du véhicule.

Des ressorts 4 sont montés entre le premier élément 1 et le deuxième élément 2, de façon à se comprimer pour autoriser une rotation relative selon l'axe X entre le premier élément 1 et le deuxième élément 2.

Le deuxième élément 2 comprend deux rondelles latérales 2a et 2b montées solidaire en rotations autour de l'axe X et espacées axialement l'une de l'autre ; et le premier élément comprend un disque intermédiaire 1 disposé axialement entre les deux rondelles latérales 2a et 2b.

Le disque de friction 6 est porté ici par le disque intermédiaire 1 à sa périphérie externe.

Le disque d'embrayage comporte en outre un moyeu de sortie 40 entrainé en rotation indirectement, via un pré-amortisseur 150, par le deuxième élément 2, via la rondelle latérale 2a. Le moyeu de sortie 40 est couplé avec un jeu angulaire avec le deuxième élément 2. Le pré-amortisseur 150 est doté de ressorts de pré amortisseur disposés cinématiquement entre le moyeu de sortie 40 et le deuxième élément 2.

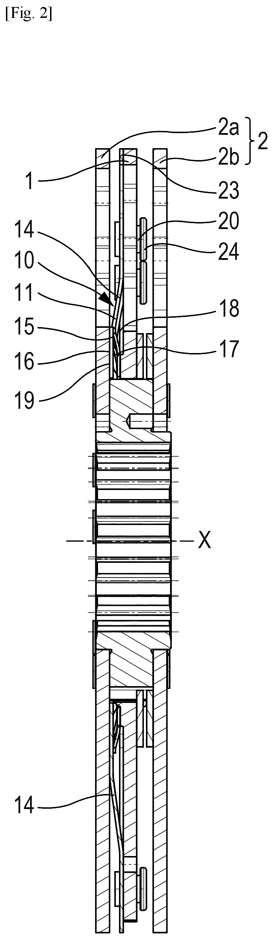

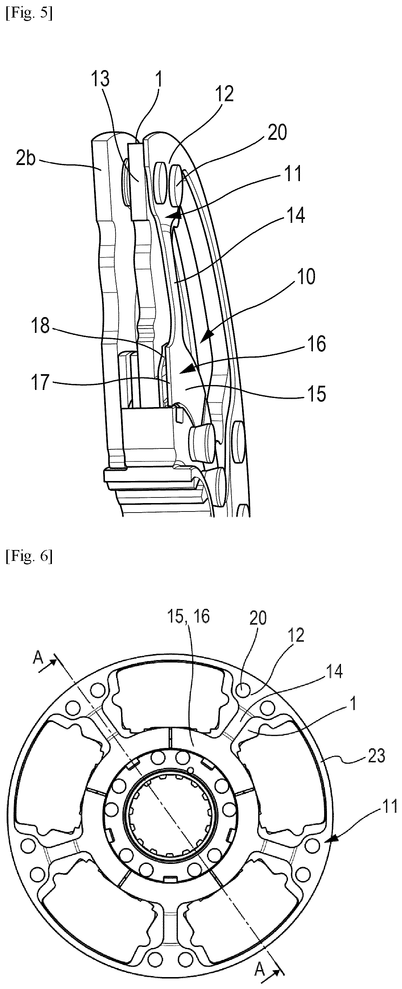

Comme on peut le voir sur les figures 2 et 5, un moyeu comprend un collet de part et d'autre duquel les rondelles latérales 2a et 2b viennent en butée axialement.

En outre, comme on peut le voir sur les figures 2, 4, 5 et 6 le disque intermédiaire 1 comprend un élément de support 13 et l'amortisseur 100 comporte un dispositif de frottement 10 comprenant une rondelle de frottement 11 dotée d'au moins une portion de fixation 12 fixée de façon rigide en rotation sur l'élément de support 13 du disque intermédiaire 1.

La rondelle de frottement 11 a une portion de frottement 15 présentant une piste de frottement 16 adossée à une face dorsale 17 de la portion de frottement 15.

Le dispositif de frottement 10 comporte aussi une rondelle élastique 18 agencée axialement entre le disque intermédiaire 1 et la face dorsale 17 de la portion de frottement 15, chaque portion de fixation 12 du disque intermédiaire 1 étant reliée à la portion de frottement 15 par un élément flexible 14 autorisant un déplacement axial de la face dorsale 17 de la portion de frottement 15 par rapport à l'élément de support 13 du disque intermédiaire 1. Ainsi, on peut réaliser un blocage en rotation entre l'élément de support et la rondelle de frottement 11, sans jeu angulaire, tout en autorisant un déplacement de la face dorsale 17 de la portion de frottement 15 par rapport à l'élément de support 13, ce qui permet de compenser les usures des surfaces de frottement.

L'élément flexible 14 est une patte flexible 14. Elle est formée d'un seul tenant avec la portion de frottement 15 et la portion de fixation 12 de la rondelle de frottement 11 qui est avantageusement fabriquée dans une tôle.

On voit sur la figures 2 que la rondelle élastique 18 est agencée axialement entre le disque intermédiaire 1 et la face dorsale 17 de la portion de frottement 15, pour presser axialement la portion de frottement 15 de la rondelle de frottement 11 contre une surface de friction 19 de la rondelle latérale 2a.

Chaque élément de support 13 et chaque portion de fixation 12 comportent chacun au moins un orifice 21, 22. Chaque orifice de portion de fixation 12 est agencé au regard d'un orifice d'élément de support 13.

Chaque portion de fixation 12 peut ainsi être fixée de façon rigide en rotation à l'élément de support correspondant 13 au moyen d'au moins un élément de fixation 20, telle qu'un rivet 20.

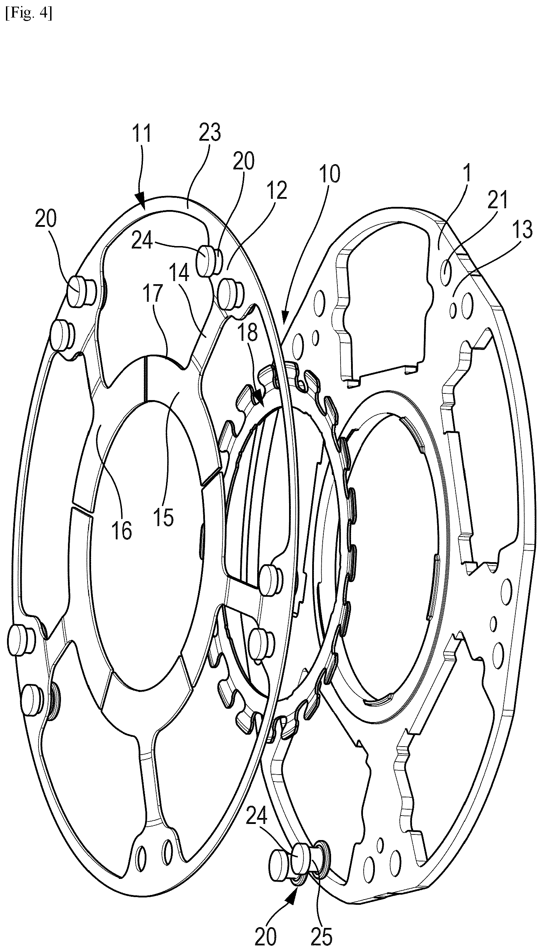

Chaque portion de fixation 12 est également bloquée axialement sur l'élément de support 13 grâce aux rivets 20. Les rivets 20 sont représentés dans le bas de la figure 4. Chaque rivet comprend un fût 25 destiné à être engagé dans les orifices 21, 22 de la portion de fixation 12 et de l'élément de support 13, et comprenant en outre à chaque extrémité une tête 24 élargie par rapport au fût 25, ce qui permet de bloquer également axialement les portions de fixation 12.

La portion de frottement 15 est formée sur une partie radialement interne de la rondelle de frottement 11 et chaque portion de fixation 12 est formée sur une partie radialement externe de la rondelle de frottement 11.

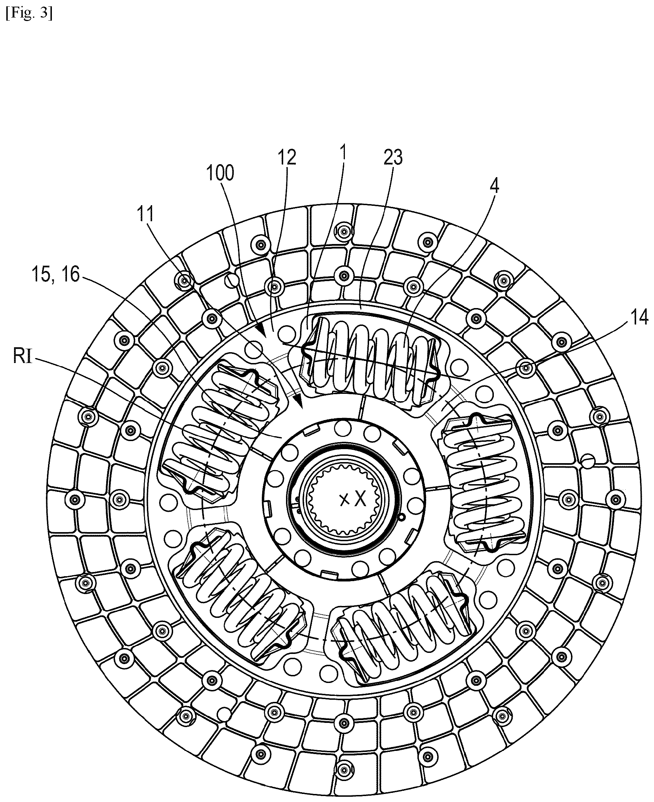

Comme on peut le voir sur les figures 1 et 3, les ressorts 4 du disque d'embrayage sont des ressorts hélicoïdaux qui s'étendent circonférentiellement ou tangentiellement autour de l'axe X sur un rayon d'implantation moyen RI, et les portions de fixation 12 sont agencées radialement à l'extérieur du rayon d'implantation moyen RI. Le rayon d'implantation moyen RI est pris au niveau de la zone médiane de la longueur d'un ressort 4, et au niveau de l'axe principal autour duquel les spires du ressort 4 s'enroulent.

La rondelle de frottement 11 comporte une pluralité de portions de fixation 12 et le disque intermédiaire 1 comprend une pluralité d'éléments de supports 13, chaque élément de support 13 recevant une portion de fixation 12.

Chaque patte flexible est élastiquement déformable axialement,

Chaque patte flexible 14 et la rondelle élastique 18 sont configurées de sorte que, en fonctionnement, pour au moins un état de compression de la rondelle élastique 18, une charge axiale est exercée par chaque patte flexible 14 dans une direction opposée à la direction de la charge exercée par la rondelle élastique 18 sur la portion de frottement 15.

Les pattes flexibles 14 et la rondelle élastique 18 sont configurées de sorte que la charge exercée par la rondelle élastique 18 reste plus importante que la charge exercée par le ou les pattes flexibles 14 de la rondelle de frottement 11.

De façon générale, l'état de compression de la rondelle élastique 18 peut dépendre de la pré charge initiale de la rondelle élastique 18 et de l'état d'usure du dispositif de frottement 10.

Plus précisément, dans ce premier mode de réalisation, le ou les pattes flexibles 14 et la rondelle élastique 18 sont configurés pour que, sur au moins une plage de déplacement axial P de la face dorsale, l'évolution de la charge exercée par le ou les pattes flexibles 14 compense l'évolution de la charge de la rondelle élastique 18, de sorte que la charge résultante soit sensiblement constante sur cette plage de déplacement axial de la face dorsale. Ainsi, la charge générée par les pattes flexibles 14 ne perturbe pas le fonctionnement du dispositif de frottement 10 de l'amortisseur.

Cette caractéristique apparaît sur les courbes de raideur de la figue 7.

Sur une plage de compression P de la rondelle élastique 18, la charge exercée par la rondelle élastique 18 augmente lorsque la dimension axiale de la rondelle élastique 18 augmente. Autrement dit, la charge est croissante sur cette plage.

La plage de compression P correspond donc ici à la plage de déplacement axial de la face dorsale mentionnée ci-dessus.

Ici, l'augmentation de la charge sur ladite plage de compression P est d'environ 120%.

La charge exercée par la rondelle élastique 18 est décroissante entre son état de compression maximal (à plat) et son état de compression minimal (libre), hormis sur la plage de compression P de la rondelle élastique 18 pour laquelle la charge exercée par la rondelle élastique 18 augmente lorsque la dimension axiale de la rondelle élastique 18 augmente.

Les pattes flexibles présentent une charge C14 avec une raideur axiale sensiblement linéaire.

Les pattes flexibles 14 et la rondelle élastique 18 sont configurés de sorte que l'orientation de la charge exercée par le ou les pattes flexibles 14 s'inverse pour un seuil de compression prédéterminé S de la rondelle élastique 18. On voit en effet que la courbe C14 traverse l'axe des abscisses au point S.

Les pattes flexibles et la rondelle élastique 18 sont configurées de sorte que, sur ladite plage de compression P, une diminution de la charge C18 exercée par la ou les pattes flexibles compense l'augmentation de charge de la rondelle élastique 18 sur la plage de compression P de sorte que la charge résultante C10 soit sensiblement constante sur ladite plage de compression P.

On voit sur la figure 4 que chaque patte flexible 14 est agencée circonférentiellement entre deux ressorts 4. Le disque intermédiaire 1 comprend des ouvertures pour loger les ressorts 4, et chaque élément de support 13 est disposé circonférentiellement entre deux ouvertures voisines.

La portion de frottement 15 est composée d'une pluralité de plaquettes de frottements distantes les unes des autres. Chaque plaquette de frottement 15 est associée à une seule patte flexible 14.

Les plaquettes de frottement 15 s'étendent chacune circulairement autour de l'axe X sur un secteur angulaire limité d'environ 75 degrés.

Chaque patte flexible 14 est reliée à une plaquette de frottement sur une zone de la plaquette de frottement 15 située circonférentiellement sur une zone médiane de la plaquette de frottement 15.

Chaque plaquette de frottement 15 et la patte flexible 14 correspondante forment un T.

L'amortisseur comprend ici autant de plaquettes de frottement que de ressorts intercalés entre le disque intermédiaire 1 et le deuxième élément 2.

La portion de frottement 15 forme un anneau radialement interne de la rondelle de frottement 11 qui s'étend autour d'axe de rotation X et se développe radialement.

Cet anneau radialement interne est discontinu dans le premier mode de réalisation. Autrement dit, il comporte des interruptions.

La rondelle de frottement comprend aussi un anneau radialement externe 23 et chaque patte flexible 14 relie la portion de frottement 15 et l'anneau radialement externe 23. L'anneau radialement externe s'étend autour d'axe de rotation X et se développe radialement lui aussi.

La portion de fixation 12, les pattes flexibles, la portion de frottement 15 et l'anneau radialement externe 23 sont formés d'une seule pièce dans une tôle découpée.

Un espace est présent entre deux pattes flexibles 14 voisines, notamment pour autoriser la disposition d'un ressort 4. Autrement dit, les pattes flexibles 14 sont chacune agencées entre deux ressorts 4.

L'anneau radialement externe 23 est disposé contre un bord radialement externe du disque intermédiaire 1.

Chaque portion de fixation 12 est formée sur un évasement qui prolonge la patte flexible 14 et qui relie la patte flexible 14 à l'anneau radialement externe 23. Chaque portion de fixation 12 est ici agencée pour recevoir deux rivets 20.

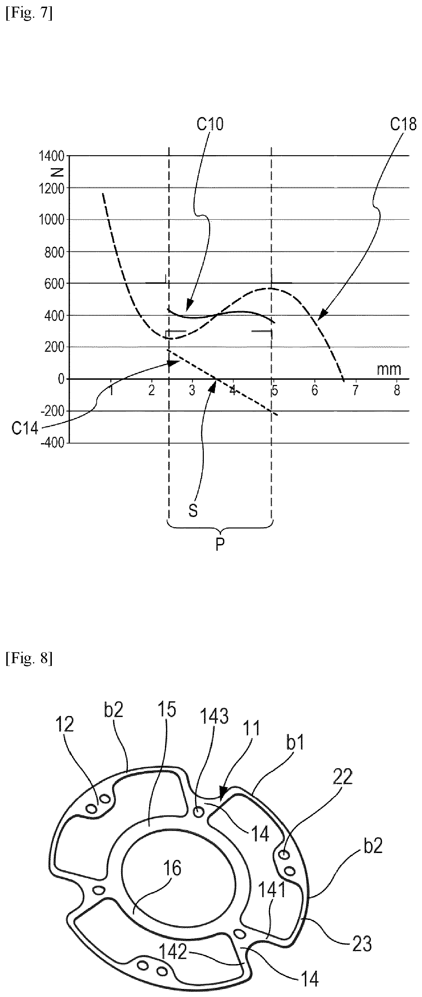

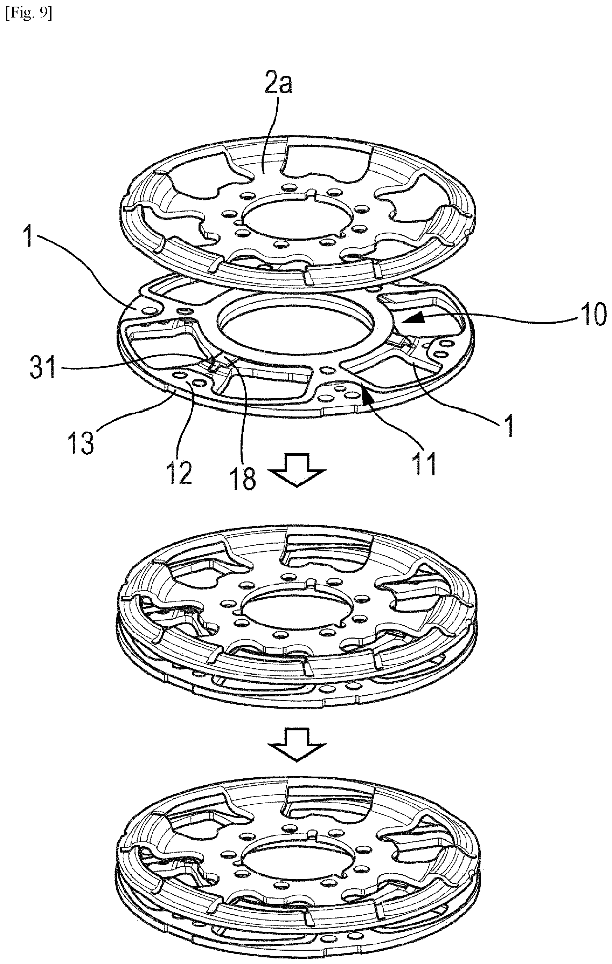

Selon un deuxième mode de réalisation représenté sur les figures 8 et 9, l'amortisseur comprend un nombre pair n de ressorts, par exemple six, intercalés circonférentiellement entre le disque intermédiaire 1et le deuxième élément. La rondelle de frottement 11 comprend n/2 portions de fixation 12, par exemple trois, et n/2 éléments flexibles, par exemple trois. Ainsi, on peut avoir une rondelle de frottement 11 avec moins de raideur axiale. Chaque portion de fixation peut être agencée circonférentiellement entre deux ressorts voisins.

Chaque élément flexible comprend deux branches b1 et b2. Les deux branches d'un élément flexible relient chacune la même portion de fixation 12 à deux zones distinctes de la portion de frottement. Chaque branche contourne le bord radialement externe d'un ressort puis l'extrémité d'un ressort. Chaque branche comporte une première portion longeant l'un des ressorts radialement à l'extérieur de ce ressort. Chaque branche b1, b2 comporte aussi une deuxième portion reliant la première portion de branche à la portion de frottement. Cette deuxième portion de branche est disposée circonférentiellement entre deux ressorts. Chaque branche a une forme de L. Chaque portion de fixation 12 est disposée entre deux ressorts et l'élément flexible associé contourne ces deux ressorts, radialement à l'extérieur de ces ressorts. Depuis la portion de fixation 12, chaque première portion de branche se développe donc dans deux directions circonférentielles opposées.

L'une des branche b2 d'un premier élément flexible et l'une des branche b1 d'un second élément flexible voisin sont reliées au niveau de leur deuxième portion. Les deuxièmes portions de ces deux branches forment conjointement une patte flexible 14. Chaque portion de fixation 12 est donc agencée circonférentiellement entre deux pattes flexibles 14 voisines.

De plus, chaque patte flexible 14 comporte un trou 143. Ainsi la charge exercée est encore plus faible. Le trou 143 peut être disposé au niveau d'une extrémité radialement interne de patte flexible 14.

La portion de fixation 12 est formée sur une extension faisant saillie radialement à l'intérieur de l'anneau radialement externe 23.

L'anneau radialement externe 23 comprend des échancrures, chaque échancrure étant agencée radialement en vis-à-vis d'une patte flexible 14 de sorte que l'échancrure sépare une zone radialement externe de la patte flexible 14 en deux brins 141 et 142. La zone radialement externe de chaque patte flexible 14 forme ainsi un V.

Chaque brin se prolonge par une première portion de branche d'un élément flexible.

Ici la patte flexible 14 est directement reliée à l'anneau radialement externe et l'élément flexible est formé au moins en partie sur l'anneau radialement externe 23. En effet les portions d'anneau radialement externe reliant chaque portion de fixation 12 à chaque patte flexible 14 est également flexible de sorte que l'élément flexible, de par sa grande longueur, présente une charge élastique relativement faible. Autrement dit, les premières portions de branche sont aussi flexibles.

Les portions de fixation ne séparent pas les pattes flexibles de l'anneau radialement externe.

Bien entendu, on pourrait aussi avoir d'autres modes de réalisation avec respectivement 4, 8, 10 ressorts et respectivement 2, 4, 5 pattes flexibles.

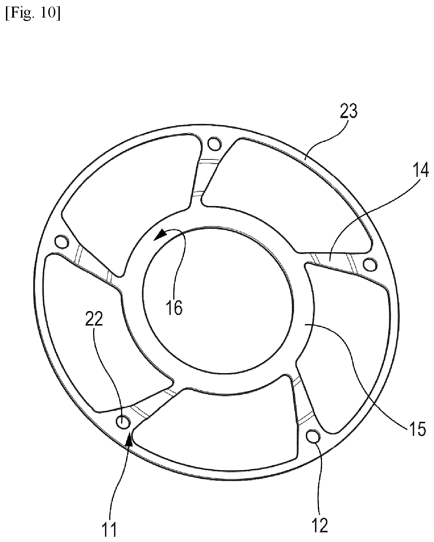

Dans le troisième mode de réalisation représentée sur la figure 10, la rondelle de frottement 11 comprend cinq pattes flexibles 14. L'amortisseur dans laquelle elle va s'intégrer comprend cinq ressorts.

Chaque patte flexible 14 s'étend dans une direction inclinée par rapport à la direction radiale, par exemple d'un angle compris entre 5 et 30 degrés.

Chaque patte flexible 14 présente une extrémité radialement interne et une extrémité radialement externe, l'extrémité radialement interne étant moins large que l'extrémité radialement externe. La largeur est mesurée dans la direction circonférentielle.

Une portion de fixation 12 est formée radialement à l'extérieur de l'extrémité radialement externe de chaque patte flexible 14.

Chaque patte flexible 14 s'étend entre deux marches de dénivellation axiale.

Les dessins de la figure 9 présentent le montage du dispositif de frottement 10.

La rondelle élastique comprend des pattes d'accroche 31 arrêtées en rotation sur le disque intermédiaire 1. Ces pattes d'accroche 31 sont disposées radialement à l'intérieur des portions de fixation 12 de la rondelle de frottement 11, avec recouvrement radial.

Les pattes d'accroche 31 de la rondelle élastique 18 sont décalées angulairement par rapport aux pattes flexibles 14.

Le disque intermédiaire 1 comporte des pattes radiales entre les ouvertures d'accueil des ressorts. Les pattes d'accroche 31 sont logées sur ces pattes radiales. Les éléments de support 13 sont également agencés sur ces pattes radiales.

La rondelle de frottement 11 est découpée dans une tôle. Elle est plane avant son montage dans l'amortisseur de torsion.

La rondelle de frottement 11 est montée sur le disque intermédiaire 1 en prenant en sandwich la rondelle élastique 18 entre le disque intermédiaire 1 et la rondelle de frottement 11.

Comme la rondelle de frottement 11 est plane, la déformation de la rondelle de frottement 11 lors de son montage permet de générer la charge axiale des éléments flexibles 14, notamment dans une direction opposée à la direction des efforts exercés par la rondelle élastique 18.

La rondelle élastique 18 est comprimée à l'état neuf selon une pré-charge nominale. Cette pré-charge nominale est obtenue lors du montage d'une rondelle latérale 2a du deuxième élément 2 contre la rondelle de frottement 11.

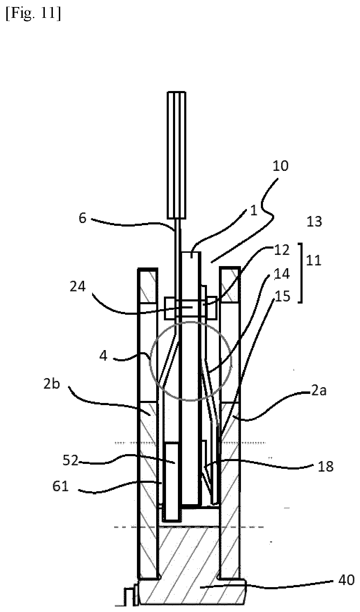

Sur la figure 11 est représenté un autre exemple de disque d'embrayage intégrant un mode de réalisation de l'invention.

Ce disque d'embrayage comprend un premier élément 1 comportant un disque central et un deuxième élément 2 comportant les deux rondelles latérales 2a, 2b et un moyeu 40.

Des ressorts hélicoïdaux 4 peuvent se comprimer circonférentiellement entre le premier élément 1 et le deuxième élément 2 au cours d'une rotation relative entre le premier élément 1 et le deuxième élément 2.

Le moyeu 40 peut être un moyeu de sortie couplé à un arbre d'entrée de boite de vitesse, ou bien un moyeu intermédiaire monté avec un jeu angulaire sur un moyeu de sortie avec un pré-amortisseur interposé cinématiquement entre le moyeu intermédiaire et le moyeu de sortie.

Le disque d'embrayage comprend un disque de friction 6 doté de garnitures de friction sur sa portion radialement externe.

Le disque de friction 6 est fixé sur le premier élément 1 et le disque de friction 6 comprend une zone interne de frottement 61 sur sa portion radialement interne.

Le disque de friction 6 est fixé rigidement en rotation sur le disque central du premier élément 1, sans jeu angulaire.

Ainsi, le premier élément 1 porte deux surfaces de frottement solidaires en rotation et rapportées sans jeu angulaire, ce qui diminue les usures et augmente la fiabilité.

Une rondelle additionnelle de frottement 52 est agencée axialement entre la zone interne de frottement 61 du disque de friction 6 et le disque central.

La rondelle additionnelle de frottement 52 est entrainée en rotation par le deuxième élément 2, grâce à un engagement par cannelures mis en œuvre entre le moyeu 40 et la rondelle additionnelle de frottement 52. La rondelle additionnelle de frottement 52 frotte ainsi sur l'une de ses faces sur le disque central et sur l'autre de ses faces sur la zone interne de frottement 61 du disque de friction 6.

La portion de frottement 15 de la rondelle de frottement 11 et la zone interne de frottement 61 du disque de friction 6 sont agencés axialement de part et d'autre du premier élément 1, en particulier de ses éléments de support 13.

Le disque de friction 6 et la rondelle de frottement 11 sont fixés sur le premier élément 1 avec les mêmes rivets 24. Dans une variante non représentée, les éléments de fixation du disque de friction et de la rondelle de frottement peuvent être distincts. Dans une variante de réalisation encore différente, l'un et/ou l'autre du disque de friction et de la rondelle de frottement peuvent êtres soudés sur le premier élément, en particulier sur le disque central.

La portion radialement interne 61 du disque de friction 6 est reliée à la portion radialement externe du disque de friction 6 par une portion intermédiaire flexible axialement.

La piste de frottement 15 de la rondelle de frottement 11 est plaquée directement contre la rondelle latérale 2a et la zone interne de frottement 61 du disque de friction 6 est plaquée directement contre l'autre rondelle latérale 2b. On entend par « directement » un contact direct entre les composants mentionnés.

Le disque de friction 6, le premier élément 1 (en particulier le disque central), la rondelle élastique 18, la rondelle de frottement 11 et la rondelle additionnelle de frottement 52 forment ensemble un sous-ensemble pré-monté apte à être inséré entre les deux rondelles latérales 2a et 2b.

La charge axiale exercée par la rondelle élastique 18 permet ainsi de plaquer non seulement la piste de frottement de la rondelle de frottement 11 contre la rondelle latérale 2a mais aussi la zone interne de frottement 61 du disque de friction 6 contre l'autre rondelle latérale 2b.

Ce sous-ensemble est apte à coulisser axialement sur le moyeu intermédiaire 40; ou sur le moyeu de sortie en l'absence de pré-amortisseur.

L'invention n'est pas limitée à ce type d'application (disque d'embrayage) et à ce type d'architecture.

Par exemple, ici le disque intermédiaire 1 est destiné à être entrainé en rotation par le moteur du véhicule, et le deuxième élément 2 est destiné à entrainer en rotation un organe d'entrée de boîte de vitesse du véhicule, tel qu'un arbre.

Selon une variante, le deuxième élément 2 peut être destiné à être entrainé en rotation par le moteur du véhicule, et le disque intermédiaire 1 peut être destiné à entrainer en rotation un organe d'entrée de boîte de vitesse du véhicule, tel qu'un arbre.

Selon une autre variante, c'est le premier élément qui comprend deux rondelles latérales montées solidaires en rotations autour de l'axe X et espacées axialement l'une de l'autre ; et le deuxième élément qui comprend un disque intermédiaire disposé axialement entre les deux rondelles latérales.

## Revendications

1. Amortisseur de torsion (100) pour un groupe motopropulseur de véhicule, l'amortisseur comprenant :
- un premier élément (1) étant apte à tourner autour d'un axe de rotation (X), le premier élément comprenant au moins un élément de support,
- un deuxième élément (2, 2a, 2b) mobile en rotation par rapport au premier élément (1) selon l'axe X,
- des ressorts (4) montés entre le premier élément (1) et le deuxième élément (2, 2a, 2b) de façon à se comprimer pour autoriser une rotation relative selon l'axe X entre le premier élément (1) et le deuxième élément (2, 2a, 2b),
- un dispositif de frottement (10) comprenant une rondelle de frottement (11) dotée d'au moins une portion de fixation (12) fixée de façon rigide en rotation sur un élément de support (13) du premier élément (1), la rondelle de frottement (11) ayant une portion de frottement (15) présentant une piste de frottement (16) adossée à une face dorsale (17) de la portion de frottement (15) ; et une rondelle élastique (18) agencée axialement entre le premier élément (1) et la face dorsale (17) de la portion de frottement (15), chaque portion de fixation (12) au premier élément (1) étant reliée à la portion de frottement (15) par un élément flexible (14) autorisant un déplacement axial de la face dorsale (17) de la portion de frottement (15) par rapport à l'élément de support (13) du premier élément (1) **caractérisé en ce que** chaque portion de fixation (12) est bloquée axialement sur l'un des éléments de support (13).

2. Amortisseur de torsion (100) selon la revendication 1 dans lequel la rondelle élastique (18) est agencée axialement entre le premier élément (1) et la face dorsale (17) de la portion de frottement (15), pour presser axialement la portion de frottement (15) de la rondelle de frottement (11) contre une surface de friction (19) du deuxième élément (2) ou une surface de friction couplée en rotation avec le deuxième élément (2).

3. Amortisseur de torsion (100) selon l'une des revendications 1 à 2 dans lequel chaque portion de fixation (12) est montée solidaire en rotation de l'un des éléments de support (13), sans jeu angulaire.

4. Amortisseur de torsion (100) selon l'une des revendications précédentes dans lequel la portion de fixation (12) est liée à l'élément de support (13) par une liaison encastrement telle qu'un rivetage ou un soudage.

5. Amortisseur de torsion (100) selon l'une des revendications précédentes dans lequel chaque élément de support (13) et chaque portion de fixation (12) comportent chacun au moins un orifice (21, 22), chaque orifice de portion de fixation (12) étant agencé au regard d'un orifice d'élément de support (13), et chaque portion de fixation (12) est fixée de façon rigide en rotation à l'élément de support correspondant (13) au moyen d'au moins un élément de fixation (20), telle qu'un rivet ou une goupille.

6. Amortisseur de torsion (100) selon l'une des revendications précédentes dans lequel la portion de frottement (15) est formée sur une partie radialement interne de la rondelle de frottement (11) et chaque portion de fixation (12) est formée sur une partie radialement externe de la rondelle de frottement (11).

7. Amortisseur de torsion (100) selon l'une des revendications précédentes dans lequel les ressorts (4) sont des ressorts hélicoïdaux qui s'étendent circonférentiellement ou tangentiellement autour de l'axe X sur un rayon d'implantation moyen (RI), et les portions de fixation (12) sont agencées radialement à l'extérieur du rayon d'implantation moyen (RI).

8. Amortisseur de torsion (100) selon l'une des revendications précédentes dans lequel chaque élément flexible (14) est élastiquement déformable axialement.

9. Amortisseur de torsion (100) selon l'une des revendications précédentes dans lequel la rondelle de frottement (11) et la rondelle élastique (18) sont configurés pour que, sur au moins une plage de déplacement axial (P) de la face dorsale (17) dans laquelle les charges de la rondelle de frottement et le la rondelle élastique (18) sont orientées axialement dans la même direction, l'évolution de la charge exercée par le ou les éléments flexibles (14) est croissante lorsque la face dorsale (17) de la rondelle de frottement (11) s'écarte de la portion de fixation (12) de la rondelle de frottement (11), et l'évolution de la charge exercée par la rondelle élastique est décroissante lorsque la face dorsale (17) de la rondelle de frottement (11) s'écarte de la portion de fixation de la rondelle de frottement (11).

10. Amortisseur de torsion (100) selon l'une des revendications précédentes dans lequel la rondelle de frottement (11) et la rondelle élastique (18) sont configurés de sorte que, en fonctionnement, pour au moins un état de compression de la rondelle élastique (18), une charge axiale est exercée par chaque élément flexible (14) dans une direction opposée à la direction de la charge exercée par la rondelle élastique (18) sur la portion de frottement (15), la charge exercée par la rondelle élastique (18) étant plus importante que la charge exercée par le ou les éléments flexibles (14) de la rondelle de frottement (11).

11. Amortisseur de torsion (100) selon l'une des revendications précédentes dans lequel la rondelle de frottement (11) et la rondelle élastique (18) sont configurés pour que, sur au moins une plage de déplacement axial (P) de la face dorsale (17), l'évolution de la charge exercée par le ou les éléments flexibles (14) compense l'évolution de la charge de la rondelle élastique (18), de sorte que la charge résultante soit sensiblement constante sur cette plage de déplacement axial de la face dorsale (17).

12. Amortisseur de torsion (100) selon l'une des revendications précédentes dans lequel la rondelle de frottement (11) et la rondelle élastique (18) sont configurés de sorte que l'orientation de la charge exercée par le ou les éléments flexibles (14) s'inverse pour un seuil de compression prédéterminé de la rondelle élastique (18).

13. Amortisseur de torsion (100) selon l'une des revendications précédentes dans lequel, la portion de frottement est composée d'une pluralité de plaquettes de frottements (15) distantes les unes des autres.

14. Disque d'embrayage pour groupe motopropulseur de véhicule équipé d'un amortisseur selon l'une des revendications précédentes et d'un disque de friction (6) doté de garnitures de friction (7), le disque de friction (6) étant porté par le premier élément et le disque de friction comprenant une zone interne de frottement (61) sur sa portion radialement interne, une rondelle additionnelle de frottement (52) étant agencée axialement entre la zone interne de frottement (61) du disque de friction et le premier élément (1), la rondelle additionnelle de frottement (52) étant entrainée en rotation par le deuxième élément (2); la portion de frottement (15) de la rondelle de frottement (11) et la zone interne de frottement (61) du disque de friction étant agencés axialement de part et d'autre du premier élément (1), en particulier de ses éléments de support.

## Patentansprüche

1. Torsionsdämpfer (100) für eine Fahrzeugantriebsgruppe, wobei der Dämpfer umfasst:
- ein erstes Element (1), das um eine Rotationsachse (X) drehbar ist, wobei das erste Element mindestens ein Stützelement umfasst,
- ein zweites Element (2, 2a, 2b), das relativ zum ersten Element (1) entlang der X-Achse drehbar ist,
- Federn (4), die zwischen dem ersten Element (1) und dem zweiten Element (2, 2a, 2b) montiert sind, um eine relative Rotation entlang der X-Achse zwischen dem ersten Element (1) und dem zweiten Element (2, 2a, 2b) zu ermöglichen,
- eine Reibungsvorrichtung (10), die eine Reibungsscheibe (11) umfasst, die mit mindestens einem Befestigungsabschnitt (12) versehen ist, der starr an einem Stützelement (13) des ersten Elements (1) befestigt ist, wobei die Reibungsscheibe (11) einen Reibungsabschnitt (15) mit einer Reibungsbahn (16) aufweist, die an einer Rückseite (17) des Reibungsabschnitts (15) anliegt; und eine elastische Scheibe (18), die axial zwischen dem ersten Element (1) und der Rückseite (17) des Reibungsabschnitts (15) angeordnet ist, wobei jeder Befestigungsabschnitt (12) am ersten Element (1) mit dem Reibungsabschnitt (15) durch ein flexibles Element (14) verbunden ist, das eine axiale Verschiebung der Rückseite (17) des Reibungsabschnitts (15) relativ zum Stützelement (13) des ersten Elements (1) ermöglicht, **dadurch gekennzeichnet, dass** jeder Befestigungsabschnitt (12) axial auf einem der Stützelemente (13) blockiert ist.

2. Torsionsdämpfer (100) nach Anspruch 1, bei dem die elastische Scheibe (18) axial zwischen dem ersten Element (1) und der Rückseite (17) des Reibungsabschnitts (15) angeordnet ist, um den Reibungsabschnitt (15) der Reibungsscheibe (11) axial gegen eine Reibungsfläche (19) des zweiten Elements (2) oder eine Reibungsfläche zu drücken, die mit dem zweiten Element (2) verbunden ist.

3. Torsionsdämpfer (100) nach einem der Ansprüche 1 bis 2, bei dem jeder Befestigungsabschnitt (12) fest mit einem der Stützelemente (13) verbunden ist, ohne Winkelspiel.

4. Torsionsdämpfer (100) nach einem der vorhergehenden Ansprüche, bei dem der Befestigungsabschnitt (12) mit dem Stützelement (13) durch eine Einspannverbindung wie eine Nietung oder Schweißung verbunden ist.

5. Torsionsdämpfer (100) nach einem der vorhergehenden Ansprüche, bei dem jedes Stützelement (13) und jeder Befestigungsabschnitt (12) jeweils mindestens eine Öffnung (21, 22) aufweisen, wobei jede Öffnung des Befestigungsabschnitts (12) gegenüber einer Öffnung des Stützelements (13) angeordnet ist, und jeder Befestigungsabschnitt (12) starr in Rotation mit dem entsprechenden Stützelement (13) mittels mindestens eines Befestigungselements (20) wie einer Niete oder einem Stift verbunden ist.

6. Torsionsdämpfer (100) nach einem der vorhergehenden Ansprüche, bei dem der Reibungsabschnitt (15) auf einem radial inneren Teil der Reibungsscheibe (11) ausgebildet ist und jeder Befestigungsabschnitt (12) auf einem radial äußeren Teil der Reibungsscheibe (11) ausgebildet ist.

7. Torsionsdämpfer (100) nach einem der vorhergehenden Ansprüche, bei dem die Federn (4) Schraubenfedern sind, die sich umfänglich oder tangential um die X-Achse auf einem mittleren Einbauradius (RI) erstrecken, und die Befestigungsabschnitte (12) radial außerhalb des mittleren Einbauradius (RI) angeordnet sind.

8. Torsionsdämpfer (100) nach einem der vorhergehenden Ansprüche, bei dem jedes flexible Element (14) axial elastisch verformbar ist.

9. Torsionsdämpfer (100) nach einem der vorhergehenden Ansprüche, bei dem die Reibungsscheibe (11) und die elastische Scheibe (18) so konfiguriert sind, dass über mindestens einen Bereich der axialen Verschiebung (P) der Rückseite (17), in dem die Belastungen der Reibungsscheibe und der elastischen Scheibe (18) axial in die gleiche Richtung wirken, die Entwicklung der durch das flexible Element oder die flexiblen Elemente (14) ausgeübten Belastung zunehmend ist, wenn sich die Rückseite (17) der Reibungsscheibe (11) vom Befestigungsabschnitt der Reibungsscheibe (11) entfernt, und die Entwicklung der durch die elastische Scheibe ausgeübten Belastung abnehmend ist, wenn sich die Rückseite (17) der Reibungsscheibe (11) vom Befestigungsabschnitt der Reibungsscheibe (11) entfernt.

10. Torsionsdämpfer (100) nach einem der vorhergehenden Ansprüche, bei dem die Reibungsscheibe (11) und die elastische Scheibe (18) so konfiguriert sind, dass im Betrieb, für mindestens einen Kompressionszustand der elastischen Scheibe (18), eine axiale Belastung durch jedes flexible Element (14) in einer Richtung entgegengesetzt zur Richtung der durch die elastische Scheibe (18) auf den Reibungsabschnitt (15) ausgeübten Belastung ausgeübt wird, wobei die durch die elastische Scheibe (18) ausgeübte Belastung größer ist als die durch das flexible Element oder die flexiblen Elemente (14) der Reibungsscheibe (11) ausgeübte Belastung.

11. Torsionsdämpfer (100) nach einem der vorhergehenden Ansprüche, bei dem die Reibungsscheibe (11) und die elastische Scheibe (18) so konfiguriert sind, dass über mindestens einen Bereich der axialen Verschiebung (P) der Rückseite (17) die Entwicklung der durch das flexible Element oder die flexiblen Elemente (14) ausgeübten Belastung der Entwicklung der Belastung der elastischen Scheibe (18) entspricht, sodass die resultierende Belastung über diesen Bereich der axialen Verschiebung der Rückseite (17) im Wesentlichen konstant ist.

12. Torsionsdämpfer (100) nach einem der vorhergehenden Ansprüche, bei dem die Reibungsscheibe (11) und die elastische Scheibe (18) so konfiguriert sind, dass die Richtung der durch das flexible Element oder die flexiblen Elemente (14) ausgeübten Belastung für einen vorbestimmten Kompressionsschwellenwert der elastischen Scheibe (18) umgekehrt wird.

13. Torsionsdämpfer (100) nach einem der vorhergehenden Ansprüche, bei dem der Reibungsabschnitt aus mehreren voneinander beabstandeten Reibungsplättchen (15) besteht.

14. Kupplungsscheibe für eine Fahrzeugantriebsgruppe, ausgestattet mit einem Dämpfer gemäß einem der vorhergehenden Ansprüche und einer Reibscheibe (6) mit Belägen (7), wobei die Reibscheibe (6) vom ersten Element getragen wird und die Reibscheibe einen inneren Reibungsbereich (61) an ihrem radial inneren Teil aufweist, wobei eine zusätzliche Reibungsscheibe (52) axial zwischen dem inneren Reibungsbereich (61) der Reibscheibe und dem ersten Element (1) angeordnet ist, wobei die zusätzliche Reibungsscheibe (52) vom zweiten Element (2) in Rotation mitgenommen wird; der Reibungsabschnitt (15) der Reibungsscheibe (11) und der innere Reibungsbereich (61) der Reibscheibe axial auf beiden Seiten des ersten Elements (1), insbesondere seiner Stützelemente, angeordnet sind.

## Claims

1. Torsion damper (100) for a vehicle powertrain, the damper comprising:
∘ a first element (1) capable of rotating around an axis of rotation (X), the first element comprising at least one support element,
∘ a second element (2, 2a, 2b) movable in rotation relative to the first element (1) along the X axis,
∘ springs (4) mounted between the first element (1) and the second element (2, 2a, 2b) so as to be compressed to allow relative rotation along the X axis between the first element (1) and the second element (2, 2a, 2b),
∘ a friction device (10) comprising a friction washer (11) equipped with at least one fastening portion (12) rigidly fixed in rotation to a support element (13) of the first element (1), the friction washer (11) having a friction portion (15) with a friction track (16) backed by a rear face (17) of the friction portion (15); and an elastic washer (18) arranged axially between the first element (1) and the rear face (17) of the friction portion (15), each fastening portion (12) to the first element (1) being connected to the friction portion (15) by a flexible element (14) allowing axial displacement of the rear face (17) of the friction portion (15) relative to the support element (13) of the first element (1)
**characterized in that** each fastening portion (12) is axially locked onto one of the support elements (13).

2. Torsion damper (100) according to claim 1, wherein the elastic washer (18) is arranged axially between the first element (1) and the rear face (17) of the friction portion (15), to press the friction portion (15) of the friction washer (11) axially against a friction surface (19) of the second element (2) or a friction surface coupled in rotation with the second element (2).

3. Torsion damper (100) according to one of claims 1 to 2, wherein each fastening portion (12) is mounted to be rotationally integral with one of the support elements (13), without angular clearance.

4. Torsion damper (100) according to one of the preceding claims, wherein the fastening portion (12) is linked to the support element (13) by a fixed connection such as riveting or welding.

5. Torsion damper (100) according to one of the preceding claims, wherein each support element (13) and each fastening portion (12) each have at least one orifice (21, 22), each orifice of the fastening portion (12) being arranged opposite an orifice of the support element (13), and each fastening portion (12) is rigidly fixed in rotation to the corresponding support element (13) by means of at least one fastening element (20), such as a rivet or a pin.

6. Torsion damper (100) according to one of the preceding claims, wherein the friction portion (15) is formed on a radially inner part of the friction washer (11) and each fastening portion (12) is formed on a radially outer part of the friction washer (11).

7. Torsion damper (100) according to one of the preceding claims, wherein the springs (4) are helical springs that extend circumferentially or tangentially around the axis X at a mean installation radius (RI), and the fastening portions (12) are arranged radially outside of the mean installation radius (RI).

8. Torsion damper (100) according to one of the preceding claims, wherein each flexible element (14) is elastically deformable axially.

9. Torsion damper (100) according to one of the preceding claims, wherein the friction washer (11) and the elastic washer (18) are configured so that, over at least one axial displacement range (P) of the rear face (17) in which the loads of the friction washer and the elastic washer (18) are axially oriented in the same direction, the evolution of the load exerted by the flexible element(s) (14) is increasing as the rear face (17) of the friction washer (11) moves away from the fastening portion (12) of the friction washer (11), and the evolution of the load exerted by the elastic washer is decreasing as the rear face (17) of the friction washer (11) moves away from the fastening portion of the friction washer (11).

10. Torsion damper (100) according to one of the preceding claims, wherein the friction washer (11) and the elastic washer (18) are configured so that, in operation, for at least one state of compression of the elastic washer (18), an axial load is exerted by each flexible element (14) in a direction opposite to the direction of the load exerted by the elastic washer (18) on the friction portion (15), the load exerted by the elastic washer (18) being greater than the load exerted by the flexible element(s) (14) of the friction washer (11).

11. Torsion damper (100) according to one of the preceding claims, wherein the friction washer (11) and the elastic washer (18) are configured so that, over at least one axial displacement range (P) of the rear face (17), the evolution of the load exerted by the flexible element(s) (14) compensates for the evolution of the load from the elastic washer (18), so that the resulting load is substantially constant over this axial displacement range of the rear face (17).

12. Torsion damper (100) according to one of the preceding claims, wherein the friction washer (11) and the elastic washer (18) are configured so that the orientation of the load exerted by the flexible element(s) (14) reverses for a predetermined compression threshold of the elastic washer (18).

13. Torsion damper (100) according to one of the preceding claims, wherein the friction portion is composed of a plurality of friction pads (15) spaced apart from one another.

14. Clutch disc for a vehicle powertrain equipped with a damper according to one of the preceding claims and a friction disc (6) with friction linings (7), the friction disc (6) being carried by the first element and the friction disc comprising an internal friction zone (61) on its radially inner portion, an additional friction washer (52) being arranged axially between the internal friction zone (61) of the friction disc and the first element (1), the additional friction washer (52) being driven in rotation by the second element (2); the friction portion (15) of the friction washer (11) and the internal friction zone (61) of the friction disc being arranged axially on either side of the first element (1), in particular of its support elements.
